# EUROPEAN PATENT APPLICATION

(11) **EP 4 668 304 A1**
(43) Date of publication of application: **24.12.2025**
(21) Application number: 24756813.2
(22) Date of filing: 09.02.2024
(51) Int. Cl.: H01G 11/36, H01G 11/38

(54) **ELECTRODE FOR CAPACITORS, METHOD FOR PRODUCING SAME AND ELECTROCHEMICAL CAPACITOR**

(30) Priority: 14.02.2023 JP 2023020718
(71) Applicant: JTEKT Corporation, Kariya-shi, Aichi 448-8652 (JP); TPR CO., LTD., Tokyo 100-0005 (JP)
(72) Inventor: KOBAYASHI, Hisato, Kariya-shi, Aichi 448-8652 (JP); NISHI, Koji, Kariya-shi, Aichi 448-8652 (JP); KOMATSUBARA, Yukihiro, Kariya-shi, Aichi 448-8652 (JP); YAMAGUCHI, Akitsugu, Kariya-shi, Aichi 448-8652 (JP); OGATA, Kazuki, Tokyo 100-0005 (JP); KAWAGUCHI, Yusuke, Tokyo 100-0005 (JP); SAYAMA, Akira, Tokyo 100-0005 (JP); KATO, Isao, Tokyo 100-0005 (JP)
(74) Representative: TBK
(86) International application number: PCT/JP2024/004547
(87) International publication number: WO 2024/171968

(57) **Abstract**

This electrode (1) for capacitors comprises a collector (11) and an active material layer (12) that is formed on the collector (11). The active material layer (12) contains an active material, a binder and carbon nanotubes. The content of the carbon nanotubes in the active material layer (12) is 0.03 to 0.50% by mass. In addition, the volume-based median diameter of the carbon nanotubes in a dispersion liquid, which is obtained by dispersing the carbon nanotubes in water, is 3.0 µm or more.

## Description

### [TECHNICAL FIELD]

The present disclosure relates to a capacitor electrode, a manufacturing method thereof, and an electrochemical capacitor.

### [BACKGROUND ART]

An electrode of an electrochemical capacitor, such as an electric double-layer capacitor or a hybrid capacitor, includes a current collector and an active material layer containing an active material made of a carbon material, the active material layer being formed on the current collector. For example, Patent Literature 1 describes an electrochemical capacitor including a polarizable electrode containing, as a main component, a carbon material having partially oxidized graphite-like microcrystalline carbon.

### [CITATION LIST]

### [PATENT LITERATURE]

Patent Literature 1: JP2000-331888A

### [SUMMARY OF INVENTION]

### [TECHNICAL PROBLEM]

However, the polarizable electrode described in Patent Literature 1 has a problem in that it is less likely to deform in accordance with the current collector. Therefore, for example, in a manufacturing process of a capacitor, when a composite of a polarizable electrode and a current collector is bent by a roller or the like on a manufacturing line, or when the composite is wound together with a separator or the like to manufacture a so-called wound cell, the polarizable electrode is likely to peel off from the current collector, which may lead to a decrease in capacitance.

The present disclosure has been made in view of such problems, and an object thereof is to provide a capacitor electrode having an active material layer that is likely to deform in accordance with a current collector, a manufacturing method thereof, and an electrochemical capacitor.

### [SOLUTION TO PROBLEM]

One aspect of the present disclosure provides a capacitor electrode including: a current collector; an active material layer containing an active material, a binder, and a carbon nanotube, the active material layer being formed on the current collector, in which the carbon nanotube has a content of 0.03 mass% or more and 0.50 mass% or less in the active material layer, and the carbon nanotube has a volume-based median diameter of 3.0 µm or more in a dispersion liquid in which the carbon nanotube is dispersed in water.

Another aspect of the present disclosure provides an electrochemical capacitor including the capacitor electrode according to the above aspect.

Yet another aspect of the present disclosure provides a manufacturing method for the capacitor electrode according to the above aspect, the manufacturing method including: preparing an electrode mixture by mixing the active material, the binder, and the dispersion liquid containing the carbon nanotube; and forming the active material layer by applying the electrode mixture onto the current collector.

### [ADVANTAGEOUS EFFECTS OF INVENTION]

The active material layer of the capacitor electrode (hereinafter, referred to as "electrode") contains the active material, the binder, and a specific amount of the carbon nanotube. Further, the carbon nanotube has a characteristic that the volume-based median diameter is in a specific range in a state of a dispersion liquid in which the carbon nanotube is dispersed in water. As described above, by incorporating the specific carbon nanotube in the active material layer and setting the content thereof to be within the specific range, the active material layer is likely to deform in accordance with the current collector, and peeling of the active material layer from the current collector can be prevented even when the electrode is bent.

Further, the electrochemical capacitor (hereinafter, referred to as "capacitor") includes the electrode. Therefore, for example, even when the electrode is bent in a manufacturing process of the capacitor or when the electrode is wound, the active material layer can easily deform in accordance with the current collector. Accordingly, the capacitor can prevent a decrease in capacitance.

The electrode mixture used in the manufacturing method for the capacitor electrode is prepared by mixing the active material, the binder, and the dispersion liquid obtained by dispersing the specific carbon nanotube in water. With such an electrode mixture, the active material layer is likely to deform in accordance with the current collector in the manufacturing process of the electrode, and peeling of the active material layer from the current collector can be prevented.

As described above, according to the above aspects, a capacitor electrode having an active material layer that is likely to deform in accordance with a current collector, a manufacturing method thereof, and an electrochemical capacitor can be provided.

### [BRIEF DESCRIPTION OF DRAWINGS]

[FIG. 1] FIG. 1 is a cross-sectional view illustrating a main portion of a capacitor electrode according to Embodiment 1.
[FIG. 2] FIG. 2 is an exploded perspective view of an electrochemical capacitor according to Embodiment 2.
[FIG. 3] FIG. 3 is a partially enlarged cross-sectional view of an electrode winding body according to Embodiment 2.

### [DESCRIPTION OF EMBODIMENTS]

### (Embodiment 1)

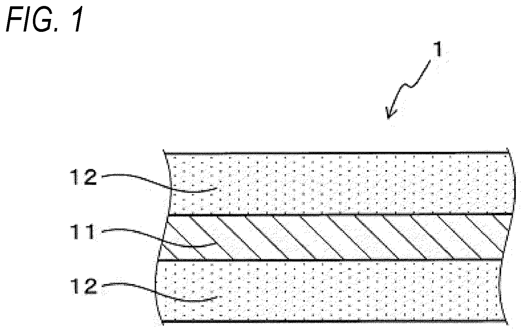

An embodiment of a capacitor electrode according to the present disclosure will be described with reference to FIG. 1. As illustrated in FIG. 1, a capacitor electrode 1 according to the present embodiment includes a current collector 11 and an active material layer 12 formed on the current collector 11. In the following description, the "capacitor electrode" may be simply referred to as the "electrode". The active material layer 12 includes an active material, a binder, and a carbon nanotube. The carbon nanotube has a content of 0.03 mass% or more and 0.50 mass% or less in the active material layer 12. The carbon nanotube has a volume-based median diameter of 3.0 µm or more in a dispersion liquid in which the carbon nanotube is dispersed in water.

The electrode 1 according to the present embodiment is configured to be usable in an electrochemical capacitor. More specifically, the electrode 1 may be configured as an electrode used in an electric double-layer capacitor. The electrode 1 may be configured as an electrode used in a hybrid capacitor such as a lithium-ion capacitor. The electrode 1 may be configured to be used as a positive electrode of an electrochemical capacitor or may be configured to be used as a negative electrode.

As the current collector 11 of the electrode 1, a metal foil made of a metal that has conductivity and is less likely to change in quality when coming into contact with an electrolytic solution can be used. As the current collector 11 of the electrode 1, an aluminum foil, a stainless-steel foil, or a copper foil can be used. The current collector 11 may or may not be provided with a through hole. The current collector 11 made of a metal foil having no through hole is less expensive than the current collector 11 made of a metal foil having a through hole. Therefore, by using a metal foil having no through hole as the current collector 11, an increase in material cost of the electrode 1 can be more easily prevented.

On the other hand, the current collector 11 made of a metal foil having no through hole has a lower adhesion to the active material layer 12 than the current collector 11 made of a metal foil having a through hole, and the active material layer 12 tends to peel off from the current collector 11. However, since the active material layer 12 according to the present embodiment contains the specific carbon nanotube, an adhesion to the current collector 11 can be further improved. Therefore, even when a metal foil having no through hole is used as the current collector 11 of the electrode 1, peeling of the metal foil from the current collector 11 can be more effectively prevented.

The active material layer 12 provided on the current collector 11 contains the active material, the binder, and the carbon nanotube. As the active material, an active material used for an electrochemical capacitor, such as activated carbon, can be used. An active material content in the active material layer 12 can be appropriately set in a range of 30 mass% or more and 90 mass% or less with respect to a solid content of the active material layer 12.

The binder contained in the active material layer 12 has a function of binding particles of the active material and the like contained in the active material layer 12. As the binder, an appropriate polymer can be used depending on a configuration and an application of the electrode 1, selected from polymers used as binders for electrochemical capacitors. More specifically, as the binder, styrene-butadiene rubber, polytetrafluoroethylene, or polyvinylidene fluoride can be used.

The binder contained in the active material layer 12 preferably contains a polymer whose relative energy difference (RED) value, calculated based on a Hansen solubility parameter for an electrolytic solution containing an organic solvent and a lithium salt electrolyte having an imide structure, is greater than 1. The active material layer 12 containing such a polymer as a binder can maintain a high capacity even in a high-temperature environment of, for example, about 85°C and prevent an increase in internal resistance. However, since the active material layer 12 containing such a polymer as a binder is less likely to deform in accordance with deformation of the current collector 11, it has been desired to prevent peeling from the current collector 11 when the electrode 1 is bent.

In contrast, since the active material layer 12 in the electrode 1 according to the present embodiment contains the specific carbon nanotube, the active material layer 12 can easily deform in accordance with the deformation of the current collector 11. Therefore, the electrode 1 according to the present embodiment can prevent peeling of the active material layer 12 from the current collector 11 even when the binder containing the specific polymer is used. Furthermore, in this case, an effect of maintaining a high capacity even in a high-temperature environment and preventing an increase in internal resistance can be achieved.

The Hansen solubility parameter (hereinafter, referred to as an "HSP") is a parameter announced by Charles M Hansen, and includes three parameters of an energy due to an intermolecular dispersion force δd, an energy due to an intermolecular dipole interaction δp, and an energy due to an intermolecular hydrogen bond δh. The HSP can be regarded as a coordinate in a three-dimensional space (also referred to as a Hansen space), and solubility of a polymer in an electrolytic solution can be predicted based on a distance between an HSP of the electrolytic solution and an HSP of the polymer in the Hansen space.

The HSP of the electrolytic solution can be estimated based on chemical structures and composition ratios of components contained in the electrolytic solution. The HSP of the polymer can be experimentally determined as follows. First, a polymer is dissolved (mixed) in a plurality of solvents having known HSPs, and HSPs of solvents in which the polymer is dissolved and HSPs of solvents in which the polymer is not dissolved are plotted in the Hansen space. Since a plot illustrating the HSPs of the solvents in which the polymer is dissolved gathers in a spherical shape in the Hansen space, a spherical region that includes the HSPs of the solvents in which the polymer is dissolved but does not include the HSPs of the solvents in which the polymer is not dissolved can be determined in the Hansen space. A coordinate of a center of the spherical region determined in this manner is set as the HSP of the polymer. The spherical region including the HSPs of the solvents in which the polymer is dissolved is referred to as a "dissolution sphere", and a radius of the dissolution sphere is referred to as an "interaction radius".

Specifically, a RED value of the polymer with respect to the electrolytic solution is a ratio Ra/R0 of a distance Ra between the HSP of the polymer and the HSP of the electrolytic solution to an interaction radius R0 of the polymer in the Hansen space. When the above RED value is greater than 1, the HSP of the electrolytic solution is located outside the dissolution sphere of the polymer, that is, in the same region as the HSPs of the solvents in which the polymer is not dissolved in the Hansen space. Therefore, when the RED value is greater than 1, it can be estimated that the electrolytic solution and the polymer are less likely to dissolve in each other.

The HSP of the electrolytic solution, the HSP of the polymer, and the RED value can be calculated using an HSP calculation support software (for example, Hansen solubility parameters in practice (HSPiP)) or the like.

A binder content in the active material layer 12 can be appropriately set in a range of 1 mass% or more and 9.97 mass% or less with respect to the solid content of the active material layer 12. When the binder content is excessively low, the active material layer 12 may peel off from the current collector 11. On the other hand, when the binder content is excessively high, electrical conductivity of the active material layer 12 may decrease, and electric resistance may increase. By setting the binder content in the active material layer 12 within the specific range, the adhesion between the active material layer 12 and the current collector 11 can be sufficiently enhanced while avoiding an increase in conductor resistance.

The active material layer 12 contains the carbon nanotube having a volume-based median diameter of 3.0 µm or more in a dispersion liquid in which the carbon nanotube is dispersed in water. By adding such a carbon nanotube to the active material layer 12, an ability of the active material layer 12 to deform in accordance with the deformation of the current collector 11 can be enhanced, and peeling of the active material layer 12 from the current collector 11 can be prevented even when the electrode 1 is bent.

The carbon nanotube preferably has a volume-based median diameter of 3 µm or more in the dispersion liquid. In this case, the ability of the active material layer 12 to deform in accordance with the deformation of the current collector 11 can be further enhanced, and the peeling of the active material layer 12 from the current collector 11 can be more effectively prevented even when the electrode 1 is bent.

Further, the carbon nanotube has, in the dispersion liquid, a volume-based median diameter of 3 µm or more and 20 µm or less, more preferably 9 µm or more and 20 µm or less, and even more preferably 14 µm or more and 20 µm or less.

The volume-based median diameter of the carbon nanotube in the above dispersion liquid is a cumulative 50% diameter (d50) in a volume-based particle size distribution of the carbon nanotube. A laser diffraction/scattering particle size distribution analyzer can be used to measure the volume-based particle size distribution of the carbon nanotube in the dispersion liquid.

The carbon nanotube content in the active material layer 12 is 0.03 mass% or more and 0.50 mass% or less with respect to the solid content of the active material layer 12. By setting the carbon nanotube content to 0.03 mass% or more and 0.50 mass% or less, preferably 0.04 mass% or more and 0.50 mass% or less, and more preferably 0.05 mass% or more and 0.50 mass% or less with respect to the solid content of the active material layer 12, the effect of enhancing the ability of the active material layer 12 to deform in accordance with the deformation of the current collector 11 can be more reliably achieved.

The carbon nanotube content in the active material layer 12 is particularly preferably 0.25 mass% or more and 0.50 mass% or less with respect to the solid content of the active material layer 12. In this case, in addition to the effect of enhancing the ability of the active material layer 12 to deform in accordance with the deformation of the current collector 11, the adhesion between the active material layer 12 and the current collector 11 can be further enhanced.

Further, by setting the carbon nanotube content to 0.03 mass% or more and 0.50 mass% or less, an excessive increase in viscosity of the electrode mixture in a manufacturing process of the electrode 1 can be easily avoided. From a viewpoint of more reliably achieving such effects, the carbon nanotube content is preferably 0.03 mass% or more and 0.45 mass% or less, and more preferably 0.03 mass% or more and 0.40 mass% or less.

Further, the carbon nanotube content may be 0.05 mass% or more and 0.40 mass% or less for a purpose of achieving the effect of increasing the ability of the active material layer 12 to deform in accordance with the deformation of the current collector 11 and easily avoiding an excessive increase in the viscosity of the electrode mixture in the manufacturing process of the electrode 1.

The carbon nanotube contained in the active material layer 12 may be a single-walled carbon nanotube or a multi-walled carbon nanotube. The carbon nanotube has an average diameter that can be appropriately selected from a range of, for example, 5 nm or more and 12 nm or less. From a viewpoint of further enhancing the ability of the active material layer 12 to deform in accordance with the deformation of the current collector 11, the carbon nanotube contained in the active material layer 12 is preferably a multi-walled carbon nanotube.

The active material layer 12 may contain a conductive additive. By adding a conductive additive to the active material layer 12, the electric resistance of the active material layer 12 and electric resistance at an interface between the active material layer 12 and the current collector 11 can be further reduced. As the conductive additive, for example, conductive carbon materials such as carbon black, acetylene black, graphite, and carbon fiber can be used.

In manufacturing the electrode 1, first, an electrode mixture is prepared by mixing an active material, a binder, and a dispersion liquid in which a carbon nanotube is dispersed in water. The carbon nanotube has a concentration that can be appropriately set, for example, in a range of 0.1 mass% or more and 1.0 mass% or less in the dispersion liquid. From a viewpoint of more easily setting the median diameter of the carbon nanotube in the dispersion liquid to a desired range, the carbon nanotube preferably has a concentration of 0.2 mass% or more and 0.7 mass% or less in the dispersion liquid.

The dispersion liquid may contain an additive such as a dispersant in addition to the carbon nanotube and water as a dispersion medium. As the dispersant, for example, carboxymethyl cellulose or sodium dodecylbenzene sulfonate can be used. The dispersant has a concentration that can be appropriately set, for example, in a range of 0.1 mass% or more and 1.0 mass% or less in the dispersion liquid. From a viewpoint of more easily setting the median diameter of the carbon nanotube in the dispersion liquid to a desired range, the dispersant is preferably carboxymethyl cellulose.

A solvent or a thickener may be added to the electrode mixture as necessary to adjust the viscosity of the electrode mixture. As the solvent, water or the like can be used. As the thickener, carboxymethyl cellulose or the like can be used. The electrode mixture has a viscosity that can be appropriately set, for example, in a range of 1000 mPa·s or more and 10000 mPa·s or less. The viscosity of the electrode mixture is a value obtained when measured using a rheometer at a shear rate of 2 s⁻¹.

Next, the electrode mixture is applied to one surface or both surfaces of the current collector 11 to form the active material layer 12. The electrode mixture can be applied using a known application device such as a blade coater or a die coater. The active material layer 12 has a thickness that may be set such that a mass of the active material per unit area is, for example, 1 mg/cm² or more and 5 mg/cm² or less.

After the active material layer 12 is formed on the current collector 11, the active material layer 12 may be dried as necessary, and the solvent and the like in the active material layer 12 may be removed. In this manner, the electrode 1 can be obtained.

The active material layer 12 in the electrode 1 according to the present embodiment can be easily deformed in accordance with the current collector 11 even when the current collector 11 is bent, and thus peeling of the active material layer 12 from the current collector 11 can be prevented.

### (Embodiment 2)

In the present embodiment, an example of an electrode configured as a positive electrode of a lithium-ion capacitor and a capacitor including the electrode will be described. Among the reference numerals used in the present embodiment and the subsequent embodiments, the same reference numerals as those used in the previous embodiment represent the same components as those in the previous embodiment unless otherwise specified.

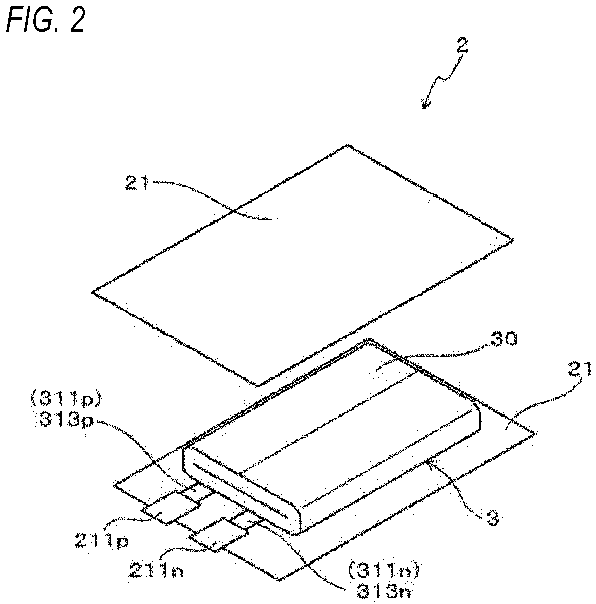

As illustrated in FIG. 2, a lithium-ion capacitor 2 according to the present embodiment includes an electrode winding body 3 formed of a laminate 30 of a positive electrode, a negative electrode, and a separator, exterior materials 21 that accommodates the electrode winding body 3, and a positive electrode terminal 211p and a negative electrode terminal 211n provided on the exterior material 21. The positive electrode terminal 211p is electrically connected to the positive electrode of the electrode winding body 3 via a positive electrode lead 313p, and the negative electrode terminal 211n is electrically connected to the negative electrode of the electrode winding body 3 via a negative electrode lead 313n. A separator 32 is impregnated with an electrolytic solution containing lithium ions and counter anions.

A cell of the lithium-ion capacitor 2 has a shape that is not particularly limited, and can take various forms such as a cylindrical shape, a square shape, and a laminate shape. The shape of the cell of the lithium-ion capacitor 2 according to the present embodiment is a laminate type as illustrated in FIG. 2, and the electrode winding body 3 is sealed between two exterior materials 21.

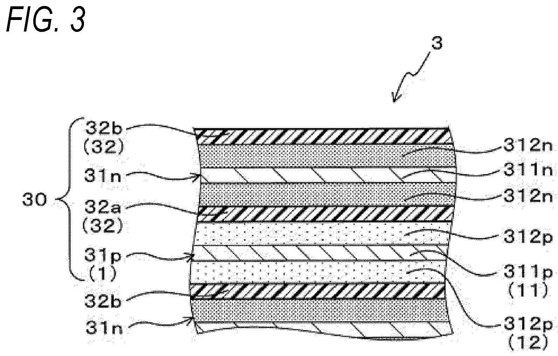

As illustrated in FIG. 3, the laminate 30 constituting the electrode winding body 3 includes a positive electrode 31p, a first separator 32a laminated on the positive electrode 31p, a negative electrode 31n laminated on the first separator 32a, and a second separator 32b laminated on the negative electrode 31n. The electrode winding body 3 is formed by winding the laminate 30.

A configuration of the positive electrode 31p according to the present embodiment is similar to that of the capacitor electrode 1 according to Embodiment 1. More specifically, the positive electrode 31p includes a positive electrode current collector 311p and a positive electrode active material layer 312p provided on the positive electrode current collector 311p. Similarly to the current collector 11 in the electrode 1 according to Embodiment 1, the positive electrode current collector 311p is composed of a metal foil made of a metal that has conductivity and is less likely to change in quality when coming into contact with the electrolytic solution. As illustrated in FIG. 2, the positive electrode current collector 311p is provided with the positive electrode lead 313p for electrically connecting the positive electrode current collector 311p and the positive electrode terminal 211p.

Similarly to the active material layer 12 in the electrode 1 according to Embodiment 1, the positive electrode active material layer 312p includes activated carbon as a positive electrode active material, a binder, and a carbon nanotube having a median diameter within the specific range in the dispersion liquid.

The first separator 32a and the second separator 32b are interposed between the positive electrode 31p and the negative electrode 31n in the electrode winding body 3, and the positive electrode 31p is electrically insulated from the negative electrode 31n by these separators 32. As the first separator 32a and the second separator 32b, for example, a porous sheet made of a polymer such as a polyolefin-based resin or cellulose can be used.

The electrolytic solution with which the first separator 32a and the second separator 32b are impregnated contains at least an electrolyte containing lithium ions and counter anions, and a solvent.

As the solvent for the electrolytic solution, for example, an organic solvent such as a carbonate-based organic solvent, a nitrile-based organic solvent, a lactone-based organic solvent, an ether-based organic solvent, an alcohol-based organic solvent, an ester-based organic solvent, an amide-based organic solvent, a sulfone-based organic solvent, a ketone-based organic solvent, or an aromatic-based organic solvent can be used. These organic solvents may be used alone or in combination of two or more organic solvents.

As the carbonate-based organic solvent, for example, a cyclic carbonate such as an ethylene carbonate, a propylene carbonate, or a fluoroethylene carbonate, or a chain carbonate such as an ethyl methyl carbonate, a diethyl carbonate, or a dimethyl carbonate can be used.

As the nitrile-based organic solvent, for example, acetonitrile, acrylonitrile, adiponitrile, valeronitrile, or isobutyronitrile can be used. As the lactone-based organic solvent, for example, γ-butyrolactone or γ-valerolactone can be used. As the ether-based organic solvent, for example, a cyclic ether such as tetrahydrofuran or dioxane, or a chain ether such as 1,2-dimethoxyethane, dimethyl ether, or triglyme can be used.

As the alcohol-based organic solvent, for example, ethyl alcohol or ethylene glycol can be used. As the ester-based organic solvent, for example, a carboxylic acid ester such as methyl acetate or propyl acetate, a phosphoric acid ester such as trimethyl phosphate, a sulfuric acid ester such as dimethyl sulfate, or a sulfurous acid ester such as dimethyl sulfite can be used.

As the amide-based organic solvent, for example, N-methyl-2-pyrrolidone or ethylenediamine can be exemplified. As the sulfone-based organic solvent, for example, a chain sulfone such as dimethyl sulfone or a cyclic sulfone such as 3-sulfolene can be used. As the ketone-based organic solvent, methyl ethyl ketone or the like can be used. As the aromatic-based organic solvent, toluene or the like can be used.

The solvent used for the electrolytic solution preferably contains a carbonate-based organic solvent. The carbonate-based organic solvent is excellent in oxidation resistance within a voltage range assumed when the lithium-ion capacitor 2 is used. Therefore, by using the carbonate-based organic solvent as the solvent for the electrolytic solution, oxidation of the electrolytic solution can be prevented for a longer period of time.

The solvent used for the electrolytic solution more preferably contains a cyclic carbonate, and more preferably essentially contains a cyclic carbonate and further contains one or two or more organic solvents selected from the group consisting of a chain carbonate, a nitrile-based organic solvent, a lactone-based organic solvent, an ether-based organic solvent, an alcohol-based organic solvent, an ester-based organic solvent, an amide-based organic solvent, a sulfone-based organic solvent, a ketone-based organic solvent, and an aromatic-based organic solvent, further preferably contains a cyclic carbonate and a chain carbonate, and particularly preferably contains ethyl methyl carbonate as the cyclic carbonate and diethyl carbonate as the chain carbonate.

By using the electrolytic solution essentially containing the cyclic carbonate, a viscosity of the electrolytic solution can be further reduced, and a degree of dissociation of the electrolyte can be further increased. As a result, ion conductivity can be further increased, and internal resistance of the lithium-ion capacitor 2 can be further reduced.

In addition, by using ethylene carbonate as the cyclic carbonate, a solid electrolytic solution phase (SEI) film can be formed on a surface of the negative electrode 31n. Accordingly, the negative electrode 31n is less likely to be directly exposed to the potential of lithium, and thus the oxidation resistance of the electrolytic solution can be further improved.

The electrolytic solution contains an electrolyte containing lithium ions and counter anions. As the counter anion, for example, an anion having an imide structure such as bis(fluorosulfonyl)imide anion, bis(trifluoromethanesulfonyl)imide anion, or bis(pentafluoroethanesulfonyl)imide anion can be used. However, the counter anion is not limited to these anions. The electrolyte in the electrolytic solution has a concentration that can be appropriately set, for example, in a range of 0.5 mol/L or more and 10.0 mol/L or less.

The electrolytic solution may contain an additive such as vinylene carbonate.

The negative electrode 31n of the electrode winding body 3 includes a negative electrode current collector 311n and a negative electrode active material layer 312n formed on the negative electrode current collector 311n. Similarly to the positive electrode current collector 311p, the negative electrode current collector 311n is composed of a metal foil made of a metal that has conductivity and is less likely to change in quality when coming into contact with the electrolytic solution. The negative electrode current collector 311n is provided with a negative electrode lead 313n for electrically connecting the negative electrode current collector 311n and the negative electrode terminal 211n.

The negative electrode active material layer 312n contains at least a negative electrode active material and a binder. As the negative electrode active material, for example, a conductive carbon material such as graphite can be used. As the binder of the negative electrode active material layer 312n, for example, styrene-butadiene rubber, polytetrafluoroethylene, or polyvinylidene fluoride can be used. Specifically, the binder in the negative electrode active material layer 312n according to the present embodiment is styrene-butadiene rubber. The capacitor electrode 1 according to Embodiment 1 may be used as the negative electrode 31n.

### (Experimental Example 1)

In this example, durability against bending of an electrode manufactured by variously changing a median diameter and an addition amount of the carbon nanotube was evaluated. A method for manufacturing the electrode and a method for evaluating the durability against bending will be described below.

### <Method for Manufacturing Electrode>

First, a dispersion liquid of the carbon nanotube was prepared by mixing carboxymethyl cellulose, the carbon nanotube, and water. An electrode mixture was prepared by mixing this dispersion liquid with activated carbon, acetylene black as a conductive additive, and a binder. An acetylene black content in the electrode mixture was set to 15 mass% with respect to a solid content of the electrode mixture.

As illustrated in Table 1, the binder used in this example contains either polymer A or polymer B. Each of the polymer A and the polymer B is a polymer whose relative energy difference (RED) value, calculated based on a Hansen solubility parameter for an electrolytic solution containing an organic solvent and a lithium salt electrolyte having an imide structure, is greater than 1. A polymer content with respect to the solid content of the electrode mixture is as illustrated in Table 1.

The carbon nanotube used in this example is a multi-walled carbon nanotube having an average diameter of 8.5 nm. As described above, the dispersion liquid contains the carbon nanotube, water as a dispersion medium, and carboxymethyl cellulose as a dispersant. In the dispersion liquid, the carbon nanotube has a concentration of 0.4 mass%, and the carboxymethyl cellulose has a concentration of 0.4 mass%. The median diameter of the carbon nanotube in the dispersion liquid and the content thereof with respect to the solid content of the electrode mixture are illustrated in Table 1. The median diameter of the carbon nanotube is a cumulative 50% diameter in a volume-based particle size distribution obtained by measuring the dispersion liquid using a laser diffraction/scattering particle size distribution analyzer.

Next, an aluminum foil having no through holes and a thickness of 15 µm was used as a current collector, and one of the electrode mixtures illustrated in Table 1 was applied onto one surface of the current collector to form an active material layer. A coating amount of the electrode mixture was adjusted such that a mass of activated carbon per unit area contained in the active material layer was 1.8 mg/cm². After the active material layer was formed on the current collector, the active material layer was dried to remove water and the like. In this manner, test specimens A1 to A10 and a test specimen C1 illustrated in Table 1 were obtained.

Test specimens B1 to B2 illustrated in Table 1 are test specimens for comparison with the test specimens A1 to A10, and a test specimen D1 is a test specimen for comparison with the test specimen C1. The test specimen B1 has the same configuration as the test specimens A1 to A10 except that the active material layer does not contain the carbon nanotube. The test specimen B2 has the same configuration as the test specimens A1 to A10 except that the median diameter of the carbon nanotubes is different. The test specimen D1 has the same configuration as the test specimen C1 except that the active material layer does not contain the carbon nanotube.

### <Method for Evaluating Durability Against Bending>

For an evaluation of durability against bending, a cylindrical mandrel having a diameter of 5 mm, 6 mm, 8 mm, or 10 mm was used. First, one end of a test specimen was fixed, and the other end thereof was gripped to dispose the test specimen in a substantially horizontal direction. In this state, a mandrel was brought into contact between one end and the other end of the test specimen, and the test specimen was wound around the mandrel such that the test specimen was half a circumference of the mandrel. Then, an appearance of a portion of the test specimen wound around the mandrel was visually observed.

In the column of "durability against bending" in Table 1, the symbol "A" is described when there is no change in the appearance of the active material layer before and after the test specimen is wound around each mandrel, the symbol "B" is described when a crack occurs in the active material layer after the test specimen is wound around the mandrel, and the symbol "C" is described when the active material layer is peeled from the current collector after the test specimen is wound around the mandrel.

**[Table 1]**

| Test specimen symbol | Electrode mixture | | | | Durability against bending | | | |
|---|---|---|---|---|---|---|---|---|
| | Carbon nanotube | | Binder | | Φ5 | Φ6 | Φ8 | Φ10 |
| | Median diameter (µm) | Content (mass%) | Type of polymer | Content (mass%) | | | | |
| A1 | 3.59 | 0.2 | Polymer A | 4.8 | C | C | A | A |
| A2 | 5.90 | 0.2 | Polymer A | 4.8 | C | C | A | A |
| A3 | 7.15 | 0.2 | Polymer A | 4.8 | C | C | A | A |
| A4 | 8.73 | 0.2 | Polymer A | 4.8 | C | C | A | A |
| A5 | 9.60 | 0.05 | Polymer A | 4.8 | C | C | A | A |
| A6 | 9.60 | 0.1 | Polymer A | 4.8 | C | C | A | A |
| A7 | 9.60 | 0.2 | Polymer A | 4.8 | C | C | A | A |
| A8 | 9.60 | 0.4 | Polymer A | 4.8 | C | C | A | A |
| A9 | 9.66 | 0.2 | Polymer A | 4.8 | C | C | A | A |
| A10 | 17.12 | 0.2 | Polymer A | 4.8 | C | B | A | A |
| B1 | - | - | Polymer A | 4.8 | C | C | C | A |
| B2 | 0.75 | 0.2 | Polymer A | 4.8 | C | C | C | A |
| C1 | 9.60 | 0.2 | Polymer B | 4.8 | B | A | A | A |
| D1 | - | - | Polymer B | 4.8 | C | B | A | A |

As illustrated in Table 1, the active material layers of the test specimens A1 to A10 include carbon nanotubes having a median diameter in the dispersion liquid within the specific range. Therefore, these test specimens are likely to deform in accordance with the deformation of the current collector as compared with the test specimen B1, which has the same configuration except that the carbon nanotube was not contained, and the test specimen B2, in which the median diameter of the carbon nanotube is outside the specific range, and even when a curvature radius of the portion wound around the mandrel is reduced, occurrence of a crack in the active material layer and peeling of the active material layer from the current collector can be prevented.

It can also be understood from a comparison between the test specimen C1 and the test specimen D1, which have the same configuration except for presence or absence of the carbon nanotube, that the active material layer of the test specimen C1 containing the carbon nanotube is likely to deform in accordance with the deformation of the current collector as compared with that of the test specimen D1 not containing the carbon nanotube, as described above.

### (Experimental Example 2)

In this example, 90° peel strength of an active material layer was evaluated for an electrode manufactured by variously changing a median diameter and an addition amount of the carbon nanotube. A method for manufacturing the electrode and a method for evaluating durability against bending will be described below.

### <Method for Manufacturing Electrode>

Electrodes (test specimens E1 to E14) in this example have the same configuration as that of the test specimens A1 to A10 in Experimental Example 1 except that the type and content of the carbon nanotube were changed as illustrated in Table 2. A method for preparing the specimens E1 to E14 was the same as that for the specimens A1 to A10 in Experimental Example 1 except that the type and content of the carbon nanotube were changed as illustrated in Table 2.

### <Method for Measuring 90° Peel Strength>

First, a double-sided tape was attached to a current collector surface of a test specimen. The double-sided tape was attached onto a slide table of a 90° peeling tester to fix the test specimen onto the slide table. Next, an adhesive tape was attached to an active material layer of the test specimen. Then, one end of the adhesive tape was pulled up at a speed of 10 mm/min such that an angle with respect to the active material layer was 90° to peel off the active material layer from the current collector, and a load required for peeling off the active material layer was measured. The above operation was performed four times for each test specimen, and an average value of four measurements was divided by a width of the adhesive tape to obtain the 90° peel strength of the active material layer (unit: N/cm), which was illustrated in Table 2.

**[Table 2]**

| Test specimen symbol | Electrode mixture | | | | 90° Peel strength (N/cm) |
|---|---|---|---|---|---|
| | Carbon nanotube | | Binder | | |
| | Median diameter (µm) | Content (mass%) | Type of polymer | Content (mass%) | |
| E1 | 3.59 | 0.2 | Polymer A | 4.8 | 0.56 |
| E2 | 5.90 | 0.2 | Polymer A | 4.8 | 0.54 |
| E3 | 7.15 | 0.2 | Polymer A | 4.8 | 0.53 |
| E4 | 8.73 | 0.2 | Polymer A | 4.8 | 0.53 |
| E5 | 9.06 | 0.2 | Polymer A | 4.8 | 0.74 |
| E6 | 9.60 | 0.05 | Polymer A | 4.8 | 0.44 |
| E7 | 9.60 | 0.1 | Polymer A | 4.8 | 0.49 |
| E8 | 9.60 | 0.2 | Polymer A | 4.8 | 0.51 |
| E9 | 9.60 | 0.4 | Polymer A | 4.8 | 0.74 |
| E10 | 9.66 | 0.05 | Polymer A | 4.8 | 0.44 |
| E11 | 9.66 | 0.1 | Polymer A | 4.8 | 0.49 |
| E12 | 9.66 | 0.2 | Polymer A | 4.8 | 0.51 |
| E13 | 9.66 | 0.4 | Polymer A | 4.8 | 0.74 |
| E14 | 17.12 | 0.2 | Polymer A | 4.8 | 0.72 |

As illustrated in Table 2, the test specimens E9 and E13, which have a relatively large content of the carbon nanotube, and the test specimen E14, which uses the carbon nanotube having a large median diameter, had higher 90° peel strength and more excellent adhesion to the current collector than the other test specimens.

The present invention is not limited to the above embodiments, and can be applied to various embodiments without departing from the gist of the present invention.

The present application is based on Japanese Patent Application No. 2023-020718 filed on February 14, 2023, the content of which is incorporated herein as reference.

## Claims

1. A capacitor electrode comprising:
a current collector;
an active material layer containing an active material, a binder, and a carbon nanotube, the active material layer being formed on the current collector, wherein
the carbon nanotube has a content of 0.03 mass% or more and 0.50 mass% or less in the active material layer, and
the carbon nanotube has a volume-based median diameter of 3.0 µm or more in a dispersion liquid in which the carbon nanotube is dispersed in water.

2. The capacitor electrode according to claim 1, wherein
the current collector is a metal foil having no through hole.

3. The capacitor electrode according to claim 1 or 2, wherein
the binder contains a polymer whose RED value, calculated based on a Hansen solubility parameter for an electrolytic solution containing an organic solvent and a lithium salt electrolyte having an imide structure, is greater than 1.

4. An electrochemical capacitor comprising the capacitor electrode according to claim 1 or 2.

5. The electrochemical capacitor according to claim 4, further comprising:
an electrode winding body formed by winding a laminate of the capacitor electrode and a separator.

6. A manufacturing method for the capacitor electrode according to claim 1 or 2, the manufacturing method comprising:
preparing an electrode mixture by mixing the active material, the binder, and the dispersion liquid containing the carbon nanotube; and
forming the active material layer by applying the electrode mixture onto the current collector.
